# EUROPÄISCHE PATENTSCHRIFT

(11) **EP 4 248 023 B1**
(45) Veröffentlichungstag und Bekanntmachung des Hinweises auf die Patenterteilung: **01.10.2025**
(21) Anmeldenummer: 21799012.6
(22) Anmeldetag: 22.10.2021
(51) Int. Cl.: E03C 1/04, B05B 1/16, E03C 1/086, B05B 12/00, B05B 15/65

(54) **SANITÄRE AUSLAUFEINHEIT UND VERFAHREN ZUM MONTIEREN UND/ODER DEMONTIEREN EINER SOLCHEN**
SANITARY OUTLET UNIT AND METHOD FOR INSTALLING AND/OR REMOVING A SANITARY OUTLET UNIT OF THIS TYPE
UNITÉ DE SORTIE SANITAIRE ET PROCÉDÉ D'INSTALLATION ET/OU DE DÉMONTAGE D'UNE UNITÉ DE SORTIE SANITAIRE DE CE TYPE

(30) Priorität: 19.11.2020 DE 202020106639 U
(43) Veröffentlichungstag der Anmeldung: 27.09.2023
(73) Patentinhaber: Neoperl GmbH, 79379 Müllheim (DE)
(72) Erfinder: STÄDTLER, Georg, 79379 Müllheim (DE)
(74) Vertreter: Mertzlufft-Paufler, Cornelius
(86) Internationale Anmeldenummer: PCT/EP2021/079415
(87) Internationale Veröffentlichungsnummer: WO 2022/106153

(56) Entgegenhaltungen:
- EP-A1- 1 672 129
- WO-A1-2018/050285
- DE-U1- 202007 007 667

## Beschreibung

Die Erfindung betrifft eine sanitäre Auslaufeinheit mit einem Grundkörper, der zum Verschrauben mit einem Armaturenauslauf ausgebildet ist, und mit einer Handhabe, mit welcher eine Schraubbewegung des Grundkörpers antreibbar ist.

Die Erfindung betrifft weiter ein Verfahren zum Montieren und/oder Demontieren einer sanitäre Auslaufeinheit an einem Armaturenauslauf, wobei eine Schraubbewegung eines Grundkörpers der sanitären Auslaufeinheit relativ zu dem Armaturenauslauf mit einer Handhabe angetrieben wird.

Es ist bekannt, sanitäre Auslaufeinheiten, die beispielsweise einen Strahlregler oder einen Strahlformer aufweisen, an einem Armaturenauslauf einer Armatur zu befestigen, indem die Auslaufeinheit in ein Innengewinde oder auf ein Außengewinde der Armatur geschraubt wird. Hierzu werden häufig speziell geformte Werkzeuge eingesetzt. Es ist auch vorgeschlagen worden den Antrieb über eine Münze zu vermitteln, die in einen passenden Schlitz an der Auslaufeinheit eingesetzt wird.

Aus der WO 2018/050285 A1 ist eine sanitäre Einheit bekannt, die ein hülsenförmiges Auslaufmundstück aufweist, das an einem Wasserauslauf einer sanitären Auslaufarmatur montierbar ist, und einen Hülseninnenraum hat, in den eine sanitäre Funktionseinheit mit zumindest einem Funktionselement eingesetzt ist, das ein Bauteil hat, welches mittels einer von außen zugreifbaren Handhabe über ein im Funktionselement axial verschieblich geführtes Übertragungselement zwischen zumindest zwei Funktionsstellungen verstellbar ist.

Der Erfindung liegt die Aufgabe zugrunde, die Gebrauchseigenschaften einer sanitären Auslaufeinheit zu verbessern.

Zur Lösung der genannten Aufgabe sind erfindungsgemäß die Merkmale des Anspruchs 1 vorgesehen. Insbesondere wird somit zur Lösung der genannten Aufgabe bei einer sanitären Auslaufeinheit der eingangs beschriebenen Art erfindungsgemäß vorgeschlagen, dass die Handhabe zwischen einer eingekuppelten Stellung, in welcher eine Antriebsverbindung zum Grundkörper besteht, und einer ausgekuppelten Stellung, in welcher die Antriebsverbindung unterbrochen ist, verstellbar ist. Somit ist die Handhabe zum Antrieb der Schraubbewegung verwendbar, und es ist auf einfache Weise erreichbar, dass die sanitäre Auslaufeinheit nicht unbeabsichtigt losgeschraubt wird. Ein separates Werkzeug zum Antrieb der Schraubbewegung ist verzichtbar. Die Möglichkeit einer Schraubbefestigung ist in ein ansprechendes Äußeres integrierbar.

Die Antriebsverbindung kann hierbei beispielsweise über eine Kupplung herstellbar sein. Bei der Kupplung können ein Kupplungsteil und ein Gegenkupplungsteil beispielsweise formschlüssig ineinandergreifen.

Erfindungsgemäß ist vorgesehen, dass die Handhabe relativ zu dem Grundkörper axial verstellbar ist. Somit kann erreicht werden, dass ein Einkuppeln oder Auskuppeln unabhängig von der Drehbewegung des Antriebs zu jedem Zeitpunkt ausführbar ist, indem eine weitere Bewegungsachse genutzt wird.

Erfindungsgemäß ist vorgesehen, dass die Handhabe in ausgekuppelter Stellung mit einer Umstellvorrichtung zwischen wenigstens zwei Wasserführungen in Wirkverbindung steht. Somit ist eine doppelte Nutzung des Freiheitsgrades der Drehbewegung eröffnet.

Besonders günstig ist es, wenn die Antriebsverbindung in beiden Positionen der Umstellvorrichtung einkuppelbar ist.

Bei einer vorteilhaften Ausgestaltung kann vorgesehen sein, dass ein Fixierelement ausgebildet ist, um die Handhabe selbsttätig in der ausgekuppelten Stellung und/oder in der eingekuppelten Stellung zu halten. Somit ist eine Fixierung, beispielsweise durch eine entsprechende Rastmechanik, in einer der beiden oder in beiden Stellungen einfach möglich.

Es kann auch vorgesehen sein, dass ein Rückstellelement ausgebildet ist, welches die ausgekuppelte Stellung herstellt. Dies kann helfen, ein unbeabsichtigtes Lösen der Schraubverbindung zu vermeiden.

Bei einer vorteilhaften Ausgestaltung kann vorgesehen sein, dass die Handhabe in der ausgekuppelten Stellung zumindest jenseits von Begrenzungsanschlägen frei drehbeweglich angeordnet ist. Somit ist die ausgekuppelte Stellung einfach wahrnehmbar und von der eingekuppelten Stellung leicht unterscheidbar.

Bevorzugt kann die Handhabe in der ausgekuppelten Stellung frei um eine volle Umdrehung beweglich angeordnet sein. Dies kann eine zufällige oder ungewollte Betätigung (ein zufälliges oder ungewolltes Lösen) der Schraubverbindung vermeiden helfen.

Bei einer vorteilhaften Ausgestaltung kann vorgesehen sein, dass ein axialer Verstellweg der Handhabe relativ zum Grundkörper zumindest einseitig oder sogar beidseitig begrenzt ist. Somit ist ein Erreichen einer Stellung oder ein Umschalten zwischen der ausgekuppelten Stellung und der eingekuppelten Stellung einfach wahrnehmbar.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe bei einem Verfahren zum Montieren und/oder Demontieren einer sanitären Auslaufeinheit der eingangs beschriebenen Art erfindungsgemäß vorgeschlagen, dass die Handhabe zum Antrieb in eine eingekuppelte Stellung, in der eine Antriebsverbindung zum Grundkörper besteht, verstellt wird. Somit ist eine werkzeugfreie Betätigung der Schraubverbindung ermöglicht. Ein ungewolltes Lösen in der ausgekuppelten Stellung ist einfach vermeidbar.

Eine bevorzugte Anwendung der Erfindung sieht vor, dass bei dem erfindungsgemäßen Verfahren eine erfindungsgemäße sanitäre Auslaufeinheit, insbesondere wie zuvor beschrieben oder nach einem der auf eine sanitäre Auslaufeinheit gerichteten Ansprüche, verwendet wird. Somit lassen sich die beschriebenen Vorteile bei einem Montieren und/oder Demontieren der sanitären Auslaufeinheit nutzen.

Bevorzugt weist die Handhabe eine Schiebefläche zu einer formschlüssigen, manuellen Einbringung eines Drehmoments auf.

Die Erfindung ist in den unabhängigen Ansprüchen definiert. Vorteilhafte Ausgestaltungen sind in den abhängigen Ansprüchen aufgeführt. Die Erfindung wird nun anhand eines Ausführungsbeispiels näher beschrieben, ist jedoch nicht auf das Ausführungsbeispiel beschränkt.

Es zeigt:
- Fig. 1: eine erfindungsgemäße sanitäre Auslaufeinheit in einer dreidimensionalen Schrägansicht von unten,
- Fig. 2: die sanitäre Auslaufeinheit aus Fig. 1 in einem Axialschnitt,
- Fig. 3: die sanitäre Auslaufeinheit aus Fig. 1 in teilweise aufgeschnittener Darstellung vor Montage an einer Armatur,
- Fig. 4: die sanitäre Auslaufeinheit aus Fig. 1 in teilweise aufgeschnittener Darstellung am Armaturenauslauf einer Armatur,
- Fig. 5: die sanitäre Auslaufeinheit aus Fig. 1 in teilweise aufgeschnittener Darstellung in eingeschraubter Position,
- Fig. 6: die sanitäre Auslaufeinheit aus Fig. 1 in einer dreidimensionalen Explosionsdarstellung von unten auf die Auslaufseite,
- Fig. 7: die sanitäre Auslaufeinheit aus Fig. 1 in einer dreidimensionalen Explosionsdarstellung von oben auf die Zuströmseite,
- Fig. 8: die sanitäre Auslaufeinheit aus Fig. 1 in einer teilweise aufgeschnitten Ansicht,
- Fig. 9: die sanitäre Auslaufeinheit aus Fig. 1 in einer Ansicht von oben auf die Zuströmseite bei einer Stellung gemäß Fig. 8,
- Fig. 10: die sanitäre Auslaufeinheit aus Fig. 1 in einem Axialschnitt entsprechend der Schnittebene in Fig. 9 mit zugehörigem Strahlbild,
- Fig. 11: die sanitäre Auslaufeinheit in der Stellung gemäß Fig. 10 in einer dreidimensionalen Schrägansicht von unten auf die Auslaufseite mit zugehörigem Strahlbild,
- Fig. 12: die sanitäre Auslaufeinheit aus Fig. 1 in einer teilweise aufgeschnitten Ansicht in einer zweiten Schaltstellung,
- Fig. 13: die sanitäre Auslaufeinheit aus Fig. 1 in einer Ansicht von oben auf die Zuströmseite bei einer Stellung gemäß Fig. 12,
- Fig. 14: die sanitäre Auslaufeinheit aus Fig. 1 in einem Axialschnitt entsprechend der Schnittebene in Fig. 13 mit zugehörigem Strahlbild und
- Fig. 15: die sanitäre Auslaufeinheit in der Stellung gemäß Fig. 12 in einer dreidimensionalen Schrägansicht von unten auf die Auslaufseite mit zugehörigem Strahlbild.

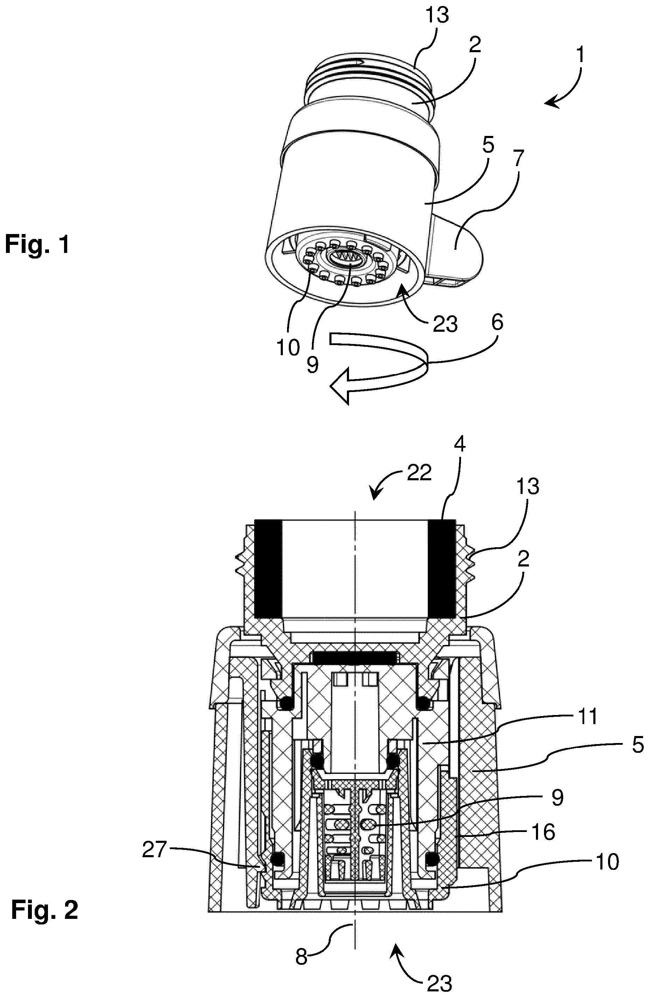

Figur 1 zeigt eine im Ganzen mit 1 bezeichnete sanitäre Auslaufeinheit. Die sanitäre Auslaufeinheit 1 hat einen Grundkörper 2, mit dem sie an einem Armaturenauslauf 3 einer nicht weiter dargestellten Armatur verschraubt ist.

Eine Dichtung 4 dichtet hierbei den Übergang vom Armaturenauslauf 3 zu dem Grundkörper 2 ab.

Die sanitäre Auslaufeinheit 1 hat weiter eine Handhabe 5, mit welcher eine Schraubbewegung 6 antreibbar ist. Zur Verstärkung des einbringbaren Drehmomentes weist die Handhabe 5 wenigstens eine Schiebefläche 7 auf. Diese Schiebeflächen 7 können beidseitig an der Handhabe 5 ausgebildet sein, um einen Antrieb in beiden Drehsinnen zu ermöglichen.

Die Schraubbewegungsweg 6 ist hierbei um eine Längsachse 8 orientiert, so dass sich der Grundkörper 2 einschrauben bzw. herausschrauben lässt.

Figur 2 zeigt eine Schnittdarstellung der sanitären Auslaufeinheit 1. Im Inneren sind ein erster Strahlformer 9 und ein zweiter Strahlformer 10 ausgebildet.

Diese Strahlformer 9, 10 dienen dazu, ein gewünschtes Strahlbild einzustellen.

Bei weiteren Ausführungsbeispielen können im Inneren der Auslaufeinheit 1 zusätzlich oder alternativ Strahlregler angeordnet sein, mit denen sich eine Durchflussmenge reduzieren und/oder auf einen gewünschten druckunabhängigen Wert einstellen lässt.

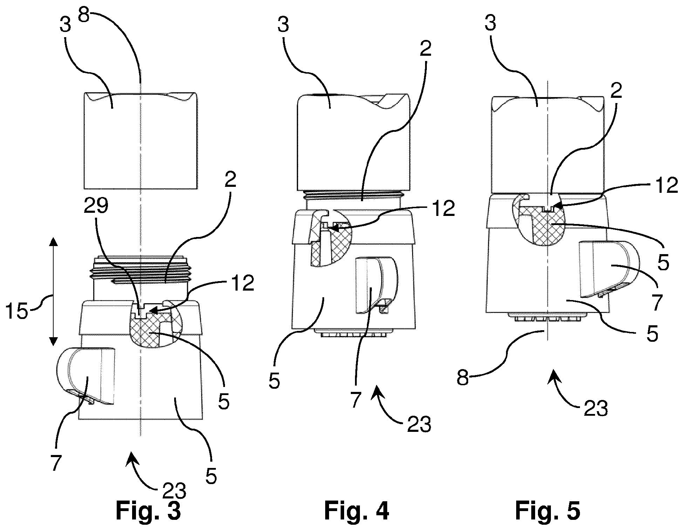

Die Figuren 3-5 zeigen eine bestimmungsgemäße Verwendung der sanitären Auslaufeinheit **1.** Hierbei zeigen die Figuren 4 und 5 eine eingekuppelte Stellung, in welcher eine Antriebsverbindung zwischen der Handhabe 5 und dem Grundkörper 2 über eine Kupplung 12 hergestellt ist.

In dieser gekoppelten Stellung lässt sich die sanitäre Auslaufeinheit 1 an dem Armaturenauslauf 3 durch die Schraubbewegung 6 montieren bzw. von dem Armaturenauslauf 3 lösen.

Figur 3 zeigt demgegenüber die ausgekuppelte Stellung, in welcher die Kupplung 12 gelöst ist und somit eine Antriebsverbindung von der Handhabe 5 zum Grundkörper 2 unterbrochen ist.

In dieser Stellung lässt sich der Grundkörper 2 nicht über die Handhabe 5 schrauben.

In dem gezeigten Ausführungsbeispiel ist an dem Grundkörper 2 ein Außengewinde 13 ausgebildet, welches in ein korrespondierendes Innengewinde 14 im Armaturenauslauf 3 eingeschraubt werden kann.

Bei weiteren, nicht in den Figuren gezeigten, Ausführungsbeispielen ist an den Grundkörper 2 ein Innengewinde ausgebildet, welches auf ein korrespondierendes Außengewinde an dem Armaturenauslauf 3 aufgeschraubt werden kann.

Durch Vergleich der Figuren 3-5 wird deutlich, dass die Handhabe 5 durch eine axiale Verstellbewegung 15 zwischen der eingekuppelten Stellung (Figur 4 und Figur 5) und der ausgekuppelten Stellung (Figur 3) hin- und hergestellt werden kann.

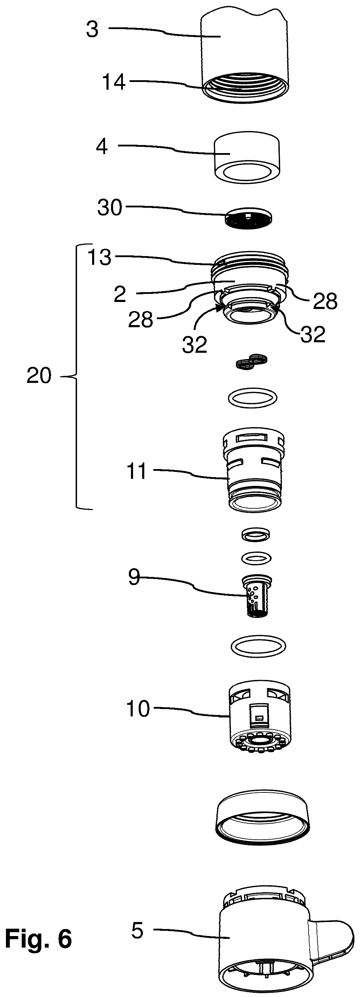

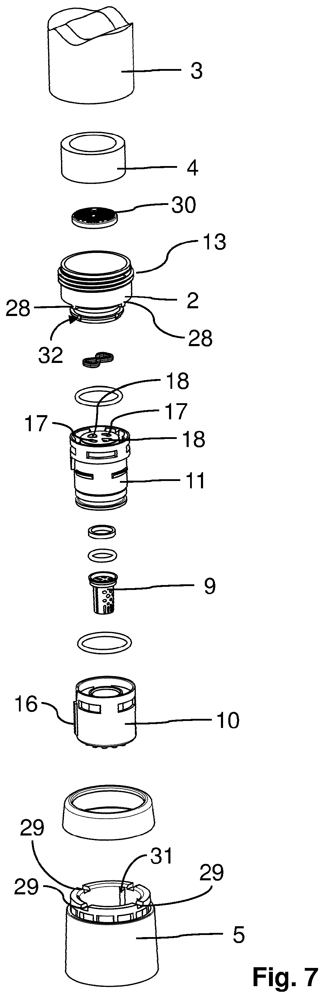

Die Figuren 6 und 7 zeigen eine Explosionsdarstellung der sanitären Auslaufeinheit 1.

Die Strahlformer 9, 10 sind an dem Innenteil 11 angeordnet, welches an die Grundkörper 2 um die Längsachse 8 drehbar befestigt ist.

Mit einer Kulissenführung 16 ist die Handhabe 5 drehfest, aber axial beweglich mit dem Strahlformer 9 verbunden.

Die Kulissenführung 16 greift in eine korrespondierende Führungsnut 31 an der Handhabe 5 ein.

Der Strahlformer 9 ist innerhalb des Strahlformer 10 angeordnet, so dass der Strahlformer 9 einen Zentralstrahl 26 formt, während der Strahlformer 10 einen Strahl mit einem ringförmigen Querschnitt formt.

An dem Innenteil 11 sind zwei Paare von Einlassöffnungen 17 ausgebildet, wobei ein erstes Paar zum Strahlformer 9 und ein zweites Paar zum Strahlformer 10 führt.

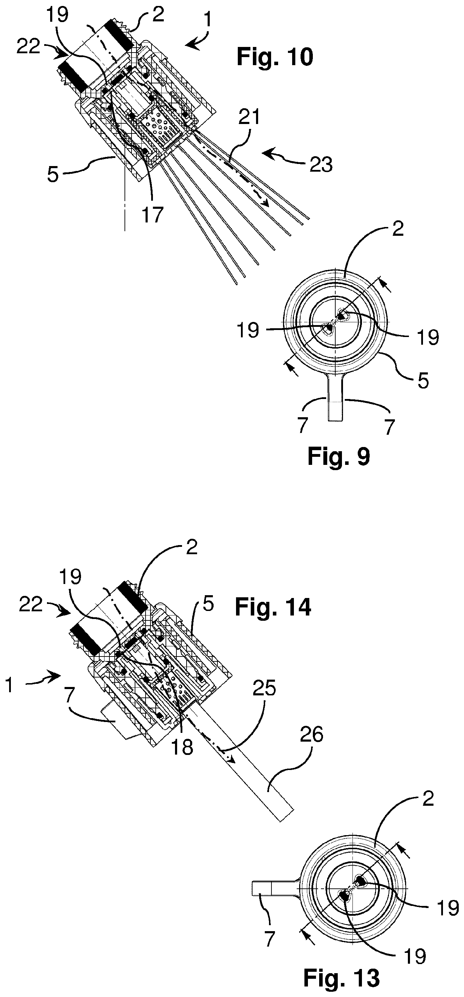

In dem Grundkörper 2 sind entsprechende Auslassöffnungen 19 ausgebildet (vgl. Figuren 9 und 10 bzw. 13 und 14), die wahlweise mit den ersten Einlassöffnungen 17 oder den zweiten Einlassöffnung 18 zur Deckung gebracht werden können.

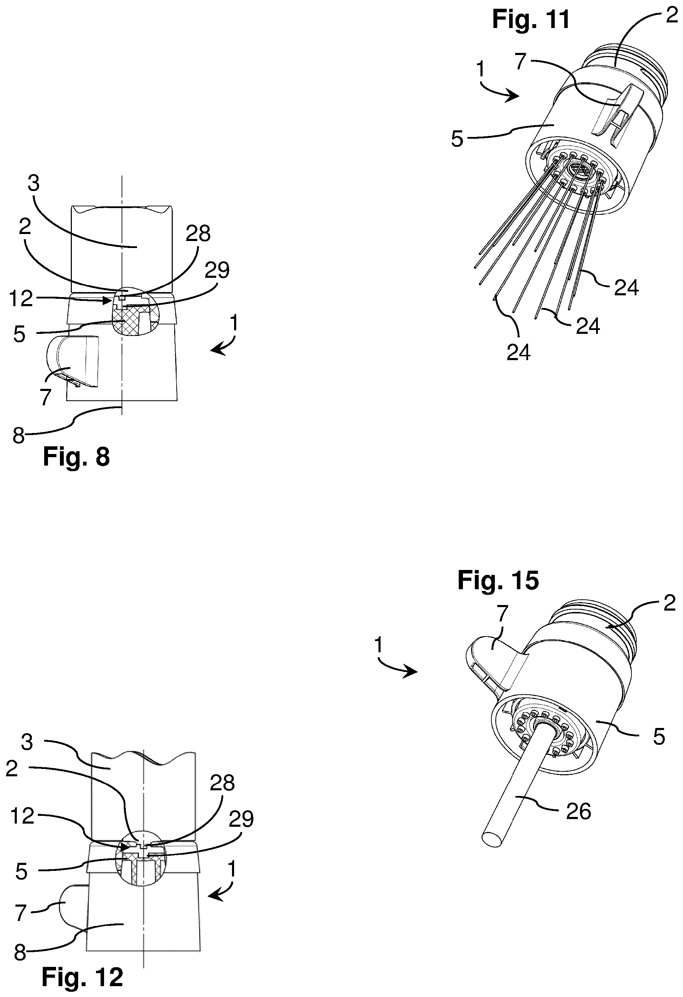

Es ist somit eine Umstellvorrichtung 20 ausbildbar, deren Funktion in den Figuren 8-15 näher erläutert wird. Figur 8 zeigt die sanitäre Auslaufeinheit 1 in ausgekuppelter Stellung.

In dieser führt eine Drehbewegung der Handhabe 5 um die Längsachse 8 nicht zu einer Schraubbewegung 6 des Grundkörpers 2, sondern lediglich zu einer Drehbewegung des Innenteils 11 mit den Strahlformer 9, 10. In einer ersten Drehposition gemäß den Figuren 9 bis 11 sind die Auslassöffnungen 19 korrespondierend zu den ersten Einlassöffnungen 17 angeordnet, so dass eine erste Wasserführung 21 von der Zuströmseite 22 über den Strahlformer 9, 10 zu der Abströmseite 23 gebildet ist. Die zweiten Einlassöffnungen 18 sind hierbei verschlossen.

Im Ergebnis tritt ein Strahl mit einem insgesamt ringförmigen Querschnitt aus, der aus Einzelstrahlen 24 gebildet ist.

Wird die Handhabe 5 in der auskuppelten Stellung um 90° gedreht, so befinden sich die Auslassöffnungen 19 gegenüber den zweiten Einlassöffnungen 18, während die ersten Einlassöffnungen 17 verschlossen sind.

Somit ist eine zweite Wasserführung 25 von der Zuströmseite 22 über den Strahlformer 9 zu der Abströmseite 23 gebildet. Aus der sanitären Auslaufeinheit 1 tritt nun ein Zentralstrahl 26 aus.

Soll dagegen die sanitäre Auslaufeinheit 1 entfernt werden, so wird die Kupplung 12 durch die axiale Verstellbewegung 15 der Handhabe 5 wieder eingekuppelt. In dieser eingekuppelten Stellung findet kein Umstellen zwischen den Wasserführungen 21, 25 statt.

In Figur 2, in der die ausgekuppelte Stellung gezeigt ist, ist eine Rastmechanik 27 als ein Fixierelement ersichtlich, mit der die Handhabe 5 axial relativ zu dem Innenteil 11 fixiert ist.

Hierdurch lässt sich erreichen, dass bei Nutzung nicht unbeabsichtigt die eingekuppelte Stellung erreicht wird.

Alternativ oder zusätzlich kann bei weiteren Ausführungsbeispielen zwischen der Handhabe 5 und dem Grundkörper 2 ein Rückstellelement eingespannt sein, um die ausgekuppelte Stellung zu erzwingen.

Die Kupplung 12 wird durch Vorsprünge 28 an dem Grundkörper 2 (als Kupplungsteil) gebildet, die in eingekuppelter Position in Ausnehmungen 29 an der Handhabe 5 (als Gegenkupplungsteil) eingreifen.

Aufgrund der Symmetrie der Anordnung der Vorsprünge 28 und der Ausnehmungen 29 lässt sich die Kupplung 12 in beiden Positionen der Umstellvorrichtung 20 einkuppeln. Dies ist in den Figuren 8 und 12 erkennbar.

Ein Vorsatzsieb 30 deckt zuströmseitig die Einlassöffnungen 17, 18 ab.

Die Handhabe 5 ist frei um die Längsachse 8 drehbar. Rastmittel 32 ermöglichen ein spürbares Wahrnehmen der Positionen der Umstellvorrichtung 20.

Bei anderen Ausführungsbeispielen kann die Umstellvorrichtung 20 auch Begrenzungsanschläge aufweisen, zwischen denen die Handhabe 5 frei drehbar ist.

Bei der sanitären Auslaufeinheit 1 wird somit erfindungsgemäß vorgeschlagen, einen Grundkörper 2 und eine von außen zugängliche Handhabe 5 zueinander zwischen eine eingekuppelten Stellung und eine ausgekuppelten Stellung beweglich anzuordnen, um den Grundkörper 2 eingekuppelter Stellung über die Handhabe 5 mit einem Armaturenauslauf 3 verschrauben zu können.

### Bezugszeichenliste

- 1: sanitäre Auslaufeinheit
- 2: Grundkörper
- 3: Armaturenauslauf
- 4: Dichtung
- 5: Handhabe
- 6: Schraubbewegung
- 7: Schiebefläche
- 8: Längsachse
- 9,10: Strahlformer
- 11: Innenteil
- 12: Kupplung
- 13: Außengewinde
- 14: Innengewinde
- 15: axiale Verstellbewegung
- 16: Kulissenführung
- 17: (erste) Einlassöffnung
- 18: (zweite) Einlassöffnung
- 19: Auslassöffnung (des Grundkörpers 2)
- 20: Umstellvorrichtung
- 21: (erste) Wasserführung
- 22: Zuströmseite
- 23: Abströmseite
- 24: Einzelstrahl
- 25: (zweite) Wasserführung
- 26: Zentralstrahl
- 27: Rastmechanik
- 28: Vorsprung
- 29: Ausnehmung
- 30: Vorsatzsieb
- 31: Führungsnut
- 32: Rastmittel

## Patentansprüche

1. Sanitäre Auslaufeinheit (1), mit einem Grundkörper (2), der zum Verschrauben mit einem Armaturenauslauf (3) ausgebildet ist, und mit einer Handhabe (5), mit welcher eine Schraubbewegung (6) des Grundkörpers (2) antreibbar ist, wobei die Handhabe (5) zwischen einer eingekuppelten Stellung, in welcher eine Antriebsverbindung zum Grundkörper (2) besteht, und einer ausgekuppelten Stellung, in welcher die Antriebsverbindung unterbrochen ist, verstellbar ist, und wobei die Handhabe (5) relativ zu dem Grundkörper (2) axial verstellbar ist, wodurch ein Einkuppeln oder Auskuppeln unabhängig von der Drehbewegung des Antriebs zu jedem Zeitpunkt ausführbar ist, **wobei** die Handhabe (5) in ausgekuppelter Stellung mit einer Umstellvorrichtung (20) zwischen wenigstens zwei Wasserführungen (21, 25) in Wirkverbindung steht, so dass durch eine Drehbewegung der Handhabe (5) die Umstellvorrichtung (20) zwischen den wenigstens zwei Wasserführungen (21, 25) umgestellt werden kann.

2. Sanitäre Auslaufeinheit (1) nach einem der vorangehenden Ansprüche, **dadurch gekennzeichnet, dass** ein Fixierelement ausgebildet ist, um die Handhabe (5) selbsttätig in der ausgekuppelten Stellung und/oder in der eingekuppelten Stellung zu halten.

3. Sanitäre Auslaufeinheit (1) nach einem der vorangehenden Ansprüche, **dadurch gekennzeichnet, dass** die Handhabe (5) in der ausgekuppelten Stellung zumindest jenseits von Begrenzungsanschlägen frei drehbeweglich angeordnet ist.

4. Sanitäre Auslaufeinheit (1) nach einem der vorangehenden Ansprüche, **dadurch gekennzeichnet, dass** ein axialer Verstellweg der Handhabe (5) relativ zum Grundkörper (2) vorzugsweise beidseitig begrenzt ist.

5. Verfahren zum Montieren und/oder Demontieren einer sanitären Auslaufeinheit (1) an einem Armaturenauslauf (3), wobei eine Schraubbewegung (6) eines Grundkörpers (2) der sanitären Auslaufeinheit (1) relativ zu dem Armaturenauslauf (3) mit einer Handhabe (5) angetrieben wird, wobei die Handhabe (5) zwischen einer eingekuppelten Stellung, in welcher eine Antriebsverbindung zum Grundkörper (2) besteht, und einer ausgekuppelten Stellung, in welcher die Antriebsverbindung unterbrochen ist, insbesondere durch eine axiale Verstellbewegung (15) der Handhabe (5), verstellbar ist, und wobei die Handhabe (5) relativ zu dem Grundkörper (2) axial verstellbar ist, wodurch ein Einkuppeln oder Auskuppeln unabhängig von der Drehbewegung des Antriebs zu jedem Zeitpunkt ausführbar ist, wobei die Handhabe (5) in ausgekuppelter Stellung mit einer Umstellvorrichtung (20) zwischen wenigstens zwei Wasserführungen (21, 25) in Wirkverbindung steht, so dass durch eine Drehbewegung der Handhabe (5) die Umstellvorrichtung (20) zwischen den wenigstens zwei Wasserführungen (21, 25) umgestellt werden kann.

## Claims

1. Sanitary outlet unit (1) comprising a main body (2), which is configured to be screwed to a fitting outlet (3), and comprising a handle (5) by means of which a screwing movement (6) of the main body (2) can be driven, wherein the handle (5) can be adjusted between a coupled position in which a drive connection is present with the main body (2) and an uncoupled position in which the drive connection is interrupted, and wherein the handle (5) can be axially adjusted relative to the main body (2), whereby coupling or uncoupling can be performed independently of the rotational movement of the drive at any time, **wherein** the handle (5) in the uncoupled position is operatively connected to a switching device (20) between at least two water conduits (21, 25) so that the switching device (20) can be changed over between the at least two water conduits (21, 25) by a rotary movement of the handle (5).

2. Sanitary outlet unit (1) according to one of the preceding claims, **characterized in that** a fixing element is configured to hold the handle (5) automatically in the uncoupled position and/or in the coupled position.

3. Sanitary outlet unit (1) according to one of the preceding claims, **characterized in that** in the uncoupled position the handle (5) is arranged so as to be movable in a freely rotatable manner at least beyond limit stops.

4. Sanitary outlet unit (1) according to one of the preceding claims, **characterized in that** an axial adjustment path of the handle (5) relative to the main body (2) is preferably limited on both sides.

5. Method for installing and/or removing a sanitary outlet unit (1) on a fitting outlet (3), wherein a screwing movement (6) of a main body (2) of the sanitary outlet unit (1) relative to the fitting outlet (3) is driven by a handle (5), wherein the handle (5) is adjustable between a coupled position in which a drive connection is present with the main body (2) and an uncoupled position in which the drive connection is interrupted, in particular by an axial adjustment movement (15) of the handle (5), and wherein the handle (5) is axially adjustable relative to the main body (2) by means of which coupling and uncoupling can be effected at any time independently of the rotary movement of the drive, wherein the handle (5) in the uncoupled position is in operative connection with a switching device (20) between at least two water conduits (21, 25) so that the switching device (20) can be changed over between the at least two water conduits (21, 25) by a rotary movement of the handle (5).

## Revendications

1. Unité de sortie sanitaire (1), comprenant un corps de base (2) qui est conçu pour être vissé sur un bec de robinetterie (3), et une poignée (5) permettant d'entraîner un mouvement de vissage (6) du corps de base (2), la poignée (5) étant réglable entre une position accouplée, dans laquelle il existe une liaison d'entraînement avec le corps de base (2), et une position désaccouplée, dans laquelle la liaison d'entraînement est interrompue, et la poignée (5) étant réglable axialement par rapport au corps de base (2), ce qui permet d'effectuer à tout moment un accouplement ou un désaccouplement indépendamment du mouvement de rotation de l'entraînement, la poignée (5) étant, en position désaccouplée, en liaison active avec un dispositif de commutation (20) entre au moins deux circuits d'eau (21, 25), de sorte qu'un mouvement de rotation de la poignée (5) permet de commuter le dispositif de commutation (20) entre lesdits au moins deux circuits d'eau (21, 25).

2. Unité de sortie sanitaire (1) selon l'une des revendications précédentes, **caractérisée en ce qu'**un élément de fixation est conçu pour maintenir automatiquement la poignée (5) en position désaccouplée et/ou en position accouplée.

3. Unité de sortie sanitaire (1) selon l'une des revendications précédentes, **caractérisée en ce que** la poignée (5), dans la position désaccouplée, est disposée de manière à pouvoir tourner librement au moins au-delà de butées de limitation.

4. Unité de sortie sanitaire (1) selon l'une des revendications précédentes, **caractérisée en ce qu'**une course de réglage axial de la poignée (5) par rapport au corps de base (2) est de préférence limitée des deux côtés.

5. Procédé pour monter et/ou démonter une unité de sortie sanitaire (1) sur un bec de robinetterie (3), dans lequel un mouvement de vissage (6) d'un corps de base (2) de l'unité de sortie sanitaire (1) par rapport au bec de robinetterie (3) est entraîné à l'aide d'une poignée (5), la poignée (5) étant réglable entre une position accouplée, dans laquelle il existe une liaison d'entraînement avec le corps de base (2), et une position désaccouplée, dans laquelle la liaison d'entraînement est interrompue, en particulier par un mouvement de réglage axial (15) de la poignée (5), et la poignée (5) étant réglable axialement par rapport au corps de base (2), ce qui permet d'effectuer à tout moment un accouplement ou un désaccouplement indépendamment du mouvement de rotation de l'entraînement, la poignée (5) étant, en position désaccouplée, en liaison active avec un dispositif de commutation (20) entre au moins deux circuits d'eau (21, 25), de sorte qu'un mouvement de rotation de la poignée (5) permet de commuter le dispositif de commutation (20) entre lesdits au moins deux circuits d'eau (21, 25).
